# DEMANDE DE BREVET EUROPEEN

(11) **EP 1 518 487 A1**
(43) Date de publication de la demande: **30.03.2005**
(21) Numéro de dépôt: 03292385.6
(22) Date de dépôt: 26.09.2003
(51) Int. Cl.: A47J 39/00

(54) **Plateau repas subdivisable en deux zones**

(71) Demandeur: SOCAMEL S.A.S., F-38140 Renage (FR)
(72) Inventeur: M. Larribau, Léon, 69520 Grigny (FR)
(74) Mandataire: Littolff, Denis

(57) **Abrégé**

Plateau-repas présentant une surface de stockage subdivisable en au moins deux zones différenciées, ledit plateau présentant dans sa partie centrale une zone sensiblement plane destinée à supporter une paroi d'étanchéité thermique, la zone plane étant configurée pour permettre un positionnement latéral droit ou gauche du plateau par rapport à la paroi d'étanchéité, et ajuster relativement les surfaces des deux zones différenciées en conservant l'étanchéité thermique.

## Description

La présente invention concerne un plateau repas ayant notamment vocation à s'appliquer dans des chariots roulants de stockage de tels plateaux, lesquels sont ensuite distribués individuellement dans les chambres d'établissements par exemple de type hôpitaux.

Ces chariots constituent en fait un container roulant composé en partie interne de deux compartiments séparés par une paroi centrale faisant office de barrière thermique, car l'un des compartiments est maintenu à basse température alors que l'autre est chauffé.

Dans la plupart des cas, la nourriture attribuée à un patient est disposée sur un unique plateau. Les aliments destinés à être réchauffés y sont alors regroupés sur un côté, alors que ceux qui doivent être maintenus à basse température sont placés sur l'autre côté. La partie centrale du plateau est ensuite insérée dans une fente horizontale pratiquée dans la paroi de séparation entre les compartiments froid et chaud, de façon à ce que chaque mets se retrouve dans la zone thermiquement appropriée, et qu'il puisse être distribué à température de consommation.

La paroi centrale fait donc office de barrière thermique et doit en principe permettre d'éviter tout transfert thermique intempestif entre les compartiments, ne serait-ce que pour conserver aux aliments leur qualité gustative.

Le compartiment froid est ainsi maintenu à une température comprise entre 0 et 4° C, alors que le compartiment chaud doit garder une température comprise entre 85 et 140° C. Outre l'aspect purement gustatif mentionné, le maintien de ces températures est imposé par des normes sanitaires très strictes qui fixent des seuils de température minimale côté chaud, et maximale côté froid, afin de garantir la sécurité alimentaire des denrées proposées. Selon ces normes, l'hygiéne est assurée lorsque la température à coeur des aliments se monte à 63° C côté chaud, alors qu'elle n'est que de 8° C côté froid.

Pendant la phase de transport des plateaux repas vers leurs différentes destinations, le chariot est rempli d'un empilement de plateaux disposés sur des racks latéraux, et dont la portion centrale est insérée dans lesdites fentes. placées à intervalle régulier sur toute la hauteur de la paroi de séparation. L'existence de ces fentes pose en soi un problème dans ce type de chariot, puisqu'elles favorisent évidemment les transferts thermiques entre les compartiments alors que les normes sanitaires les prohibent et qu'elles vont à l'encontre des exigences gustatives.

Pour tenter de répondre à ce problème, il a été proposé l'utilisation d'au moins un joint flexible de type jupe, apte à obturer les fentes en l'absence de plateaux, et reposant sur la surface des plateaux en leur présence. Des systèmes à guillotine tombant sous l'effet de la gravité au contact du bord intérieur de chaque fente ou de la surface du plateau ont également été développés.

Tous ces systèmes ont été développés pour coopérer avec des plateaux dont la partie transversale centrale comporte un muret permettant d'une part l'insertion et d'autre part le centrage du plateau dans la paroi de séparation centrale équipée de la fente. Le muret est en fait conçu pour chevaucher le chant inférieur de la fente, et sa paroi horizontale présente à cet effet une largeur sensiblement équivalente à celle dudit chant. Dans cette hypothèse, les parois latérales du muret sont au moins partiellement au contact des surfaces verticales de la paroi séparant les deux compartiments constituant le chariot.

La seule direction de déplacement autorisée permet alors l'insertion/extraction du plateau dans/de la fente, selon un mouvement d'allure parallèle à l'axe de la fente. Il n'est pas possible d'initier un déplacement perpendiculaire, par exemple pour ajuster latéralement le plateau dans le chariot, ou pour régler la surface attribuée respectivement aux compartiment chaud et froid.

C'est le but que se fixe la présente invention, qui propose à cet effet un plateau disposant d'une possibilité de débattement latéral, offrant donc une possibilité d'attribution de surface permettant un choix de la part de l'utilisateur : selon les aliments placés sur le plateau, par exemple selon la saison, il peut être nécessaire de prévoir plus de place en compartiment froid et moins en compartiment chaud, ou l'inverse.

Ainsi, l'invention concerne un plateau repas présentant une surface de stockage subdivisable en au moins deux zones différenciées, ledit plateau présentant dans sa partie centrale une zone sensiblement plane destinée à supporter une paroi d'étanchéité thermique, la zone plane étant configurée pour permettre un positionnement latéral droit ou gauche du plateau par rapport à la paroi d'étanchéité, et ajuster relativement les surfaces des deux zones différenciées en conservant l'étanchéité thermique.

Plus précisément, la zone sensiblement plane consiste en une bande se développant transversalement au plateau.

Cette hypothèse préférentielle est conforme à l'exigence de départ selon laquelle le débattement doit se faire perpendiculairement à la fente, c'est à dire à la paroi d'étanchéité thermique qui est prévue pour obturer ladite fente.

Selon une possibilité, les extrémités de ladite bande peuvent comporter des rainures orientées sensiblement perpendiculairement à l'axe de ladite bande, évidées dans l'épaisseur de ladite bande, c'est à dire du fond du plateau.

Ces rainures optionnelles, situées en fait à proximité des bords extérieurs du plateau, ont pour fonction de récupérer éventuellement des matières liquides échappées des aliments disposés sur le plateau, afin d'éviter tout débordement intempestif vers l'extérieur.

Dans les autres zones périphériques du plateau, c'est à dire en dehors de la zone transversale en bande sensiblement plane, le plateau peut comporter une bordure périphérique relevée qui empêche aussi tout débordement.

La bande transversale sensiblement plane propre à l'invention peut en fait être appliquée à de nombreux types de plateaux. Ainsi, selon une possibilité additionnelle, ces plateaux peuvent comporter, de part et d'autre de ladite bande centrale, au moins une alvéole de rangement des plats ou mets proposés.

Les plateaux de l'invention, bien que dans la plupart des cas de forme sensiblement rectangulaire, peuvent également prendre d'autres configurations telles que : ovales, munies d'un muret transversal, à condition toutefois qu'il respecte la condition de zone centrale sensiblement plane permettant un débattement latéral du plateau, etc.

L'invention va à présent être décrite plus en détail, en référence aux figures annexées, pour lesquelles :
- la figure 1 est une vue en perspective d'un plateau selon l'invention; et
- la figure 2 est une vue, également en perspective, d'une paroi de séparation par exemple implantée dans un chariot de distribution de plateaux repas, munie de fentes sur ses deux chants opposés, des plateaux selon l'invention équipant certaines desdites fentes.

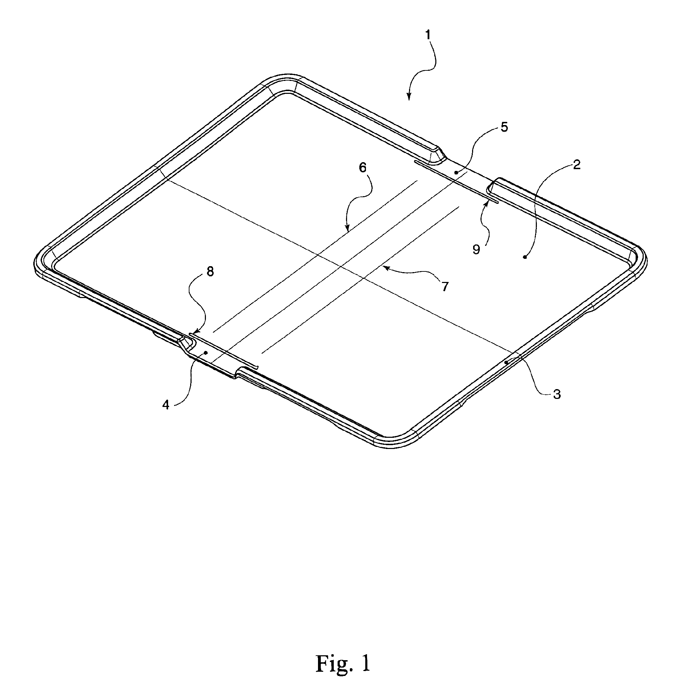

En référence à la figure 1, chaque plateau (1) est, dans cet exemple particulier, constituée d'un fond plat (2) dont la périphérie est revêtue d'une bordure surélevée (3). Cette dernière ne couvre cependant pas la totalité de la périphérie puisqu'elle s'interrompt en deux endroits (4,5) situés en vis à vis. Ceux-ci marquent les extrémités de la zone centrale d'allure plane qui caractérise l'invention, formant une bande transversale traversant la totalité du plateau et limitée par deux lignes fictives (6) et (7) rejoignant les épaulements marquant la rupture de la bordure (3). Cette bande d'allure plane autorise les déplacements du plateau dans une direction sensiblement perpendiculaire aux parois d'étanchéité, comme cela ressortira plus clairement de la suite de la description.

Selon une possibilité additionnelle que l'on doit cependant considérer comme optionnelle, le plateau comporte également des rainures (8) et (9), disposées globalement perpendiculairement aux dites lignes (6,7), au voisinage des ouvertures (4,5), prévues pour empêcher le débordement d'éventuelles matières liquides s'échappant des plats disposés sur le plateau.

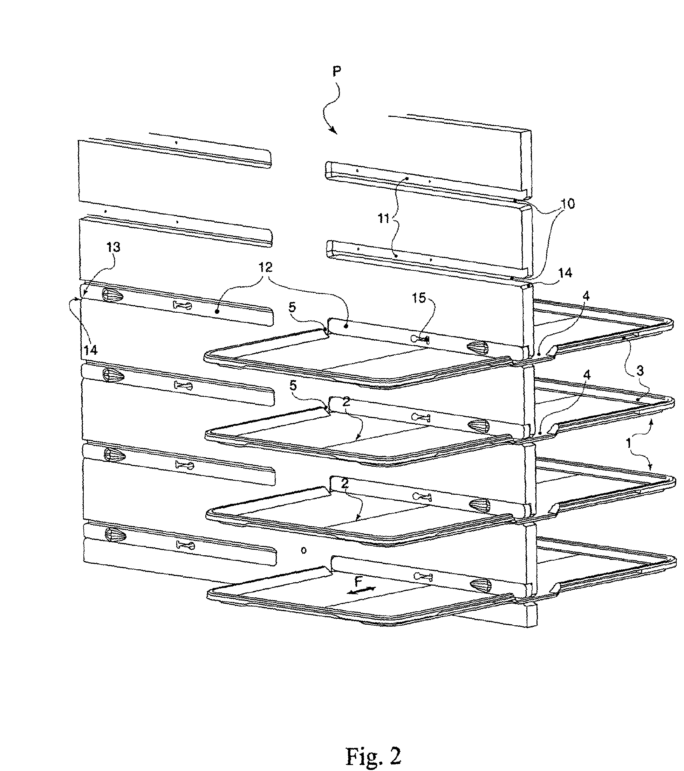

La figure 2 montre une paroi (P), par exemple séparant les compartiments chaud et froid d'un chariot, munie de fentes (10) situées au fond d'évidements (11), dans lesquels sont disposées des guillotines (12) formant paroi d'étanchéité au sens de la présente invention. Sur la partie gauche de la paroi (P), des guillotines (12) sont en position de repos au contact de la face inférieure des évidement s (11), c'est-à-dire en position d'obturation des fentes (10). Ces guillotines (12), qui sont contenues dans leur totalité dans les évidements (11 ) pratiqués dans la paroi (P), peuvent bien entendu être déplacées vers le haut, en vue de désobstruer les fentes (10) notamment aux fins d'y insérer des plateaux.

En partie droite, de tels plateaux (1) ont été insérés dans lesdites fentes (10), ce qui aboutit à soulever les guillotines (12) en direction de la paroi supérieure de l'évidement (11). Le soulèvement de la guillotine se fait automatiquement à l'insertion, du fait d'une part de l'existence d'un angle arrondi (13) situé à l'extrémité externe inférieure de la guillotine (12) et d'autre part d'un chanfrein (14) pratiqué dans le bord inférieur de l'évidemment (11). Au fur et à mesure de l'introduction du plateau (1), la guillotine (12) se soulève progressivement, notamment en pivotant initialement par rapport à l'axe constitué par le plot (15) qui sert à sa solidarisation à la paroi.

Dans la figure, les plateaux (1) apparaissent centrés par rapport à la paroi (P). Ce centrage, grâce à l'invention, n'est nullement nécessaire puisque l'existence de la bande centrale plane limitée par les épaulements marquant la naissance des bordures (3) autorise au contraire un débattement dans la direction de la flèche F. Ce déplacement est limité par les butés précisément constituées par lesdits épaulements. Il permet à l'utilisateur de choisir, dans la limite du volume offert par le chariot, la zone du plateau à affecter par exemple au compartiment froid, et par conséquent celle qui sera localisée dans le compartiment chaud.

Dans l'exemple illustré en figure 2, la bande transversale est centrée, et elle est de largeur relativement limitée, permettant un déplacement lui-même limité. Il est cependant évident que ces caractéristiques sont modifiables, et que par exemple ladite bande peut être de largeur bien supérieure, décalée vers la droite, etc. sans pour autant changer l'esprit de l'invention.

## Revendications

1. Plateau-repas présentant une surface de stockage subdivisable en au moins deux zones différenciées, ledit plateau présentant dans sa partie centrale une zone sensiblement plane destinée à supporter une paroi d'étanchéité thermique, la zone plane étant configurée pour permettre un positionnement latéral droit ou gauche du plateau par rapport à la paroi d'étanchéité, et ajuster relativement les surfaces des deux zones différenciées en conservant l'étanchéité thermique.

2. Plateau-repas selon la revendication précédente, **caractérisé en ce que** la zone sensiblement plane consiste en une bande se développant transversalement au plateau.

3. Plateau-repas selon la revendication précédente, **caractérisé en ce que** les extrémités de ladite bande comportent des rainures orientées sensiblement perpendiculairement à l'axe de ladite bande, et évidées dans l'épaisseur de ladite bande, c'est à dire dans l'épaisseur du fond du plateau.

4. Plateau-repas selon l'une des revendications précédentes, **caractérisé en ce que**, en dehors de la zone en bande transversale sensiblement plane, le plateau comporte une bordure périphérique relevée.

5. Plateau-repas selon l'une quelconque des revendications précédentes, **caractérisé en ce que** les parties du plateau situées de part et d'autre de la bande centrale comportent au moins une alvéole.
